# FASCICULE DE BREVET EUROPEEN

(11) **EP 3 775 501 B1**
(45) Date de publication et mention de la délivrance du brevet: **16.02.2022**
(21) Numéro de dépôt: 19719904.5
(22) Date de dépôt: 28.03.2019
(51) Int. Cl.: F01D 25/12, F02C 7/18, F01D 11/24, F16L 3/00

(54) **DISPOSITIF DE REFROIDISSEMENT POUR UNE TURBINE D'UNE TURBOMACHINE**
KÜHLVORRICHTUNG FÜR EINE TURBINE EINER TURBOMASCHINE
COOLING DEVICE FOR A TURBINE OF A TURBOMACHINE

(30) Priorité: 03.04.2018 FR 1852873
(43) Date de publication de la demande: 17.02.2021
(73) Titulaire: SAFRAN AIRCRAFT ENGINES, 75015 Paris (FR)
(72) Inventeur: MORLIERE, Simon, Nicolas, 77550 MOISSY-CRAMAYEL (FR); GIRARDEAU, Julian, Nicolas, 77550 MOISSY-CRAMAYEL (FR); PRESTEL, Sébastien, Jean, Laurent, 77550 MOISSY-CRAMAYEL (FR); ABADIE, Ghislain, Hervé, 77550 MOISSY-CRAMAYEL (FR); GILLOT, Benjamin, Franklin, François, 77550 MOISSY-CRAMAYEL (FR)
(74) Mandataire: Ernest Gutmann - Yves Plasseraud S.A.S.
(86) Numéro de dépôt international: PCT/FR2019/050714
(87) Numéro de publication internationale: WO 2019/193267

(56) Documents cités:
- WO-A1-2010/122120
- FR-A1- 3 002 590
- US-A1- 2015 345 328

## Description

### DOMAINE

La présente invention concerne un dispositif de refroidissement pour une turbine d'une turbomachine, telle par exemple qu'un turboréacteur d'avion, en particulier un turboréacteur à double flux.

### CONTEXTE

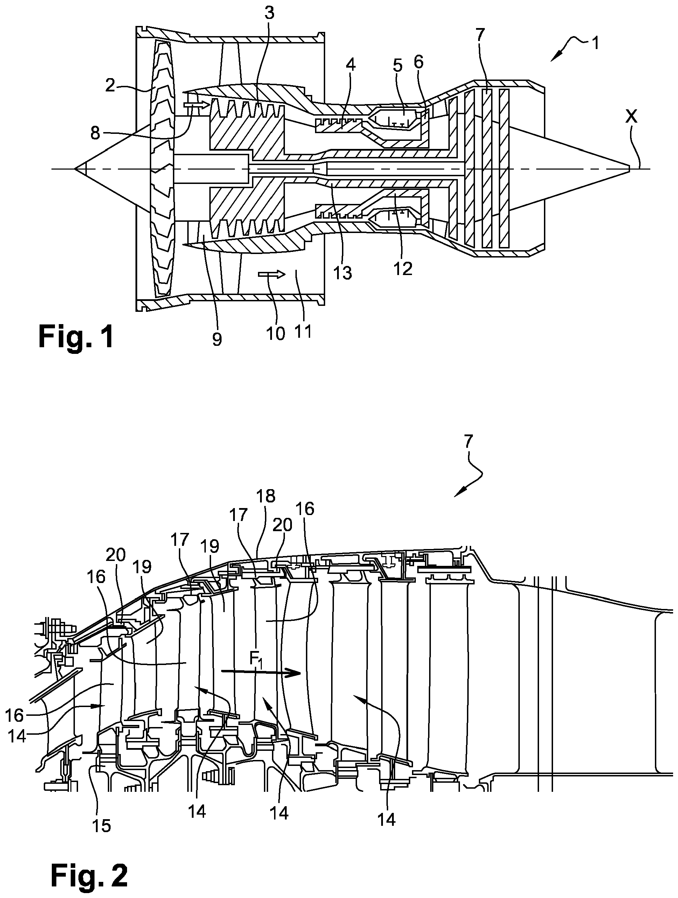

La figure 1 représente une turbomachine 1 à double flux et à double corps. L'axe de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7.

L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 10.

Le compresseur basse pression 3, le compresseur haute pression 4, la chambre de combustion 5, la turbine haute pression 6 et la turbine basse pression 7 sont ménagées dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13 de manière à former un corps basse pression, la soufflante 2 pouvant être reliée directement au rotor du compresseur basse pression 3 ou bien par l'intermédiaire d'un train d'engrenage épicycloïdal par exemple.

Comme cela est mieux visible à la figure 2, la turbine basse-pression 7 comporte en particulier différents étages successifs comportant des roues mobiles 14 et des parties fixes. La roue mobile comporte un disque 15 au niveau duquel sont montées des aubes 16. Les extrémités des aubes 16 sont entourées d'un anneau fixe 17 en matériau abradable, ledit anneau 17 étant fixé sur le carter 18 de la turbine. Des distributeurs 19 sont situés en aval des roues mobiles 14. Les distributeurs 19 et les anneaux 17 sont montés sur le carter par l'intermédiaire de brides ou de crochets 20 s'étendant depuis la surface radialement interne du carter 18.

Afin de garantir un rendement élevé de la turbomachine, il convient de limiter le flux d'air ne traversant pas les roues mobiles 14 des différents étages, c'est-à-dire de limiter les fuites entre les extrémités radialement externes des aubes 16 et l'anneau 17 en matériau abradable. Pour cela, il convient de contrôler le jeu au niveau de cette interface, ce jeu étant dépendant de la température du carter 18, et notamment des zones dudit carter 18 comportant les crochets ou brides 20 supportant l'anneau 17.

Le flux d'air primaire issu de la chambre de combustion 5 présente une température élevée et échauffe les parties situées en aval, telles que les parties fixes et mobiles de la turbine 6, 7.

Afin de maîtriser le jeu précité et d'éviter toute dégradation prématurée des différentes parties fixes et mobiles de la turbine, il est nécessaire de prévoir des moyens de refroidissement efficaces pouvant s'intégrer aisément dans l'environnement de la turbomachine.

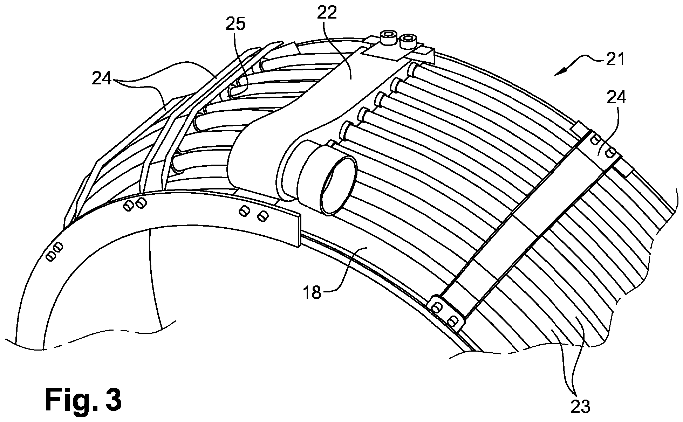

La demande de brevet FR 3 021 700, au nom de la Demanderesse, divulgue un dispositif de refroidissement 21 d'un carter 18 de turbine basse pression 7, visible à la figure 3, comportant des boîtiers collecteurs 22, chaque boîtier collecteur 22 formant un canal s'étendant axialement.

Le dispositif 21 comporte de plus des tubes 23 s'étendant circonférentiellement de part et d'autre des boîtiers collecteurs 22. Lesdits tubes 23, également appelés rampes, sont formés par des canalisations courbes de section circulaire, chaque tube 23 s'étendant circonférentiellement autour du carter par exemple selon un angle d'environ 90°.

Chaque tube 23 comporte une entrée d'air débouchant dans le canal du boîtier collecteur 22 correspondant et une extrémité distale fermée. Chaque tube 23 comporte en outre une paroi cylindrique pourvue d'orifices d'éjection d'air tournés vers le carter 18, de sorte que de l'air de refroidissement puisse pénétrer dans les boîtiers collecteurs 22 puis dans les tubes 23 avant de déboucher par les orifices en regard du carter 18, de manière à le refroidir. On parle notamment de refroidissement par impact puisque l'air vient impacter le carter 18.

Tous les tubes 23 sont maintenus ensemble sur le carter 18 par l'intermédiaire de supports 24 s'étendant selon l'axe de la turbomachine, et par l'intermédiaire de crochets ou d'organes de fixation 25, situés en différents endroits de la circonférence du carter 18.

Le document FR 3 002 590, au nom de la Demanderesse, divulgue une forme de réalisation dans laquelle les organes de fixation comportent une partie radialement interne entourant, au moins en partie, le tube correspondant, et une partie radialement externe s'étendant radialement, fixée sur une languette de fixation du support. Ladite languette de fixation est réalisée par découpage et pliage d'une partie du support. Des trous circulaires sont ménagés dans ladite languette et dans l'organe de fixation correspondant, lesdits trous permettant le passage d'une vis de fixation coopérant avec un écrou.

Il s'avère qu'il est difficile de maîtriser la position exacte des languettes après pliage, rendant difficile la maîtrise de la position radiale et axiale des crochets et donc des rampes servant au refroidissement des zones concernées du carter, ce qui affecte l'efficacité du refroidissement. Par ailleurs, il est possible que les parties radialement internes des tubes viennent en appui contre la surface externe du carter, sous l'effet des contraintes thermiques, mécaniques et vibratoires appliquées en fonctionnement. L'effort exercé par le carter sur les tubes est transmis aux languettes par l'intermédiaire des organes de fixation, ce qui peut avoir pour effet une déformation plastique irréversible des languettes, voire des organes de fixation, rendant impossible le bon positionnement radial et axial ultérieur des tubes par rapport au carter.

### RESUME DE L'INVENTION

L'invention a notamment pour but d'apporter une solution simple, efficace et économique à ces problèmes.

A cet effet, elle propose un dispositif de refroidissement s'étendant circonférentiellement autour d'un carter de turbomachine, tel par exemple qu'un carter de turbine, comportant
- un support s'étendant axialement et destiné à être fixé au carter,
- au moins un tube de refroidissement s'étendant circonférentiellement,
- au moins un organe de fixation, comportant une partie radialement interne entourant au moins en partie le tube, et une partie radialement externe fixée au support,
caractérisé en ce que la partie radialement externe de l'organe de fixation est fixée au support par l'intermédiaire d'un organe de liaison comportant une partie centrale présentant une première partie d'extrémité circonférentielle et une seconde partie d'extrémité circonférentielle qui sont circonférentiellement opposées, la première partie d'extrémité et la seconde partie d'extrémité s'étendant chacune selon une direction axiale opposée, les première et seconde parties d'extrémité étant chacune fixée au support, la partie radialement externe de l'organe de fixation étant fixée à la partie centrale de l'organe de liaison.

L'organe de liaison présente ainsi une forme générale en Z, lui conférant une bonne résistance à la flexion et au vrillage, de manière à garantir le bon positionnement des organes de fixation par rapport au support, et donc le bon positionnement des tubes par rapport au carter.

Une telle résistance à la flexion et au vrillage de l'organe de liaison permet également d'éviter qu'il se déforme plastiquement en cas de contact des tubes sur le carter.

Par ailleurs, l'utilisation d'un organe de liaison distinct du support permet de mieux contrôler la fabrication des différents éléments ainsi que la chaîne de cotes permettant de placer avec précision les tubes par rapport au carter, aussi bien axialement que radialement.

Le support peut s'étendre principalement axialement.

La fixation de la partie radialement externe de l'organe de fixation sur le support peut être réalisée dans une zone située radialement à l'extérieur d'une face externe du support. La face externe du support est opposée à une face interne du support qui est tournée ou orientée vers le carter.

L'organe de liaison peut être formé par une tôle pliée.

Les parties d'extrémité de l'organe de liaison peuvent être fixées au support par l'intermédiaire de rivets.

En variante, lesdites parties d'extrémités de l'organe de liaison peuvent être fixées au support par soudage.

La partie radialement externe de l'organe de fixation peut être fixée à l'organe de liaison par l'intermédiaire d'au moins une vis ou d'un rivet s'étendant axialement.

La vis ne s'étendant pas dans la direction radiale, il est possible d'augmenter le diamètre du tube correspondant et de la partie radialement interne de l'organe de fixation entourant le tube, sans que ces éléments n'interfèrent avec la vis.

La partie centrale de l'organe de liaison peut comporter un trou oblong s'étendant radialement, ladite vis ou ledit rivet étant engagé dans ledit trou oblong.

Ainsi les organes de fixation et les tubes peuvent se déplacer radialement, par rapport au support et à l'organe de liaison. En d'autres termes, il est possible de maitriser la position radiale des tubes par rapport au carter, avant vissage ou rivetage, ce qui permet de maîtriser efficacement le refroidissement du carter.

Le dispositif peut comporter au moins deux tubes s'étendant circonférentiellement et écartés axialement l'un de l'autre, chaque tube étant fixé à un organe de fixation, la partie radialement externe de chaque organe de fixation étant fixée à la partie centrale d'un organe de liaison respectif.

Lesdites parties radialement externes des organes de fixation peuvent être fixées axialement de part et d'autre de la partie centrale de l'organe de liaison.

Les organes de fixation permettant de fixer deux tubes adjacents peuvent être disposés de façon symétrique, l'un par rapport à l'autre, par rapport à un plan radial s'étendant entre lesdits organes de fixation.

Une telle disposition permet de réduire l'encombrement axial de ces éléments.

Chaque organe de fixation peut comporter une partie sensiblement circulaire entourant le tube, et une partie de fixation s'étendant radialement vers l'extérieur depuis la partie circulaire et formant une patte de fixation. La partie circulaire est alors radialement interne tandis que la patte de fixation est radialement externe.

Le support peut comporter une paroi principale s'étendant axialement, dans laquelle est formée la lumière, le support comportant au moins une partie de butée s'étendant axialement entre deux parties de ladite lumière et s'étendant, au moins en partie, radialement à l'extérieur de la paroi principale.

La partie de butée peut s'étendre dans un plan décalé radialement vers l'extérieur de la paroi principale et comporter deux extrémités circonférentielles reliées aux bords correspondants de la lumière par des zones de liaison.

De cette manière, dans le cas où le carter vient en appui sur les tubes ou sur les parties internes des organes de fixation, la partie de butée est apte à limiter le déplacement de la partie interne de l'organe de fixation correspondant, de façon à maîtriser la déformation des parties radiales de l'organe de liaison et de l'organe de fixation, afin d'éviter une déformation plastique desdites parties radiales.

Chaque lumière du support peut présenter une forme oblongue et s'étendre axialement. Chaque lumière du support peut présenter une forme générale rectangulaire.

Une entretoise s'étendant axialement peut être montée entre la partie radialement externe d'au moins un organe de fixation et l'organe de liaison. Chaque entretoise peut être tubulaire.

La longueur de l'entretoise peut être choisie pour maîtriser la position axiale des tubes par rapport au carter. L'utilisation d'entretoises permet également d'utiliser des composants standards, les corrections de positionnement axial des tubes par rapport au carter pouvant être obtenues individuellement par utilisation d'entretoises de différentes tailles.

Le support peut comporter au moins une lumière située radialement en regard de la partie radialement interne de l'organe de fixation ou des organes de fixation.

Le support peut comporter une paroi principale s'étendant axialement, des rebords s'étendant radialement vers l'extérieur depuis les bords latéraux de la paroi principale.

Une telle structure permet d'améliorer le comportement dynamique du support lors du fonctionnement de la turbomachine en le rendant moins sensible aux vibrations.

Le support peut comporter des zones de fixation s'étendant radialement vers l'extérieur, au-delà des rebords, les parties axiales de l'organe de liaison étant fixées aux zones de fixation du support.

L'organe de liaison peut être situé circonférentiellement entre les rebords, au moins partiellement.

L'invention concerne également un ensemble comportant un carter annulaire de turbomachine, par exemple un carter annulaire de turbine, caractérisé en ce qu'il comporte un dispositif de refroidissement du type précité, fixé audit carter et entourant ledit carter.

L'invention concerne en outre une turbomachine comportant un ensemble du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en coupe axiale d'un turboréacteur à double flux de l'art antérieur,
- la figure 2 est une vue en coupe axiale d'une partie du turboréacteur de l'art antérieur, illustrant notamment la turbine basse pression,
- la figure 3 est une vue en perspective d'un dispositif de refroidissement de l'art antérieur,
- la figure 4 est vue en perspective d'une partie d'un dispositif de refroidissement selon une forme de réalisation de l'invention,
- la figure 5 est une vue de détail de la figure 4,
- la figure 6 est une vue en perspective d'un organe de liaison.

### DESCRIPTION DETAILLEE

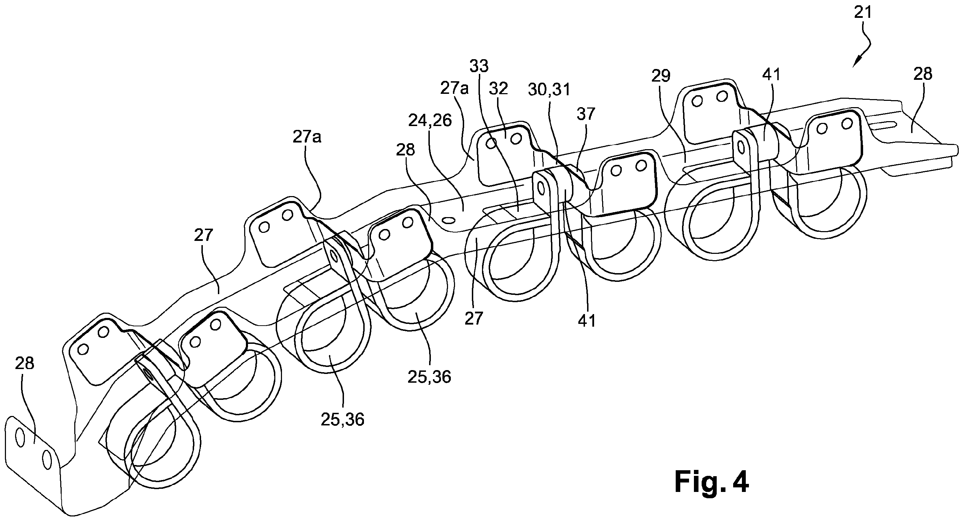

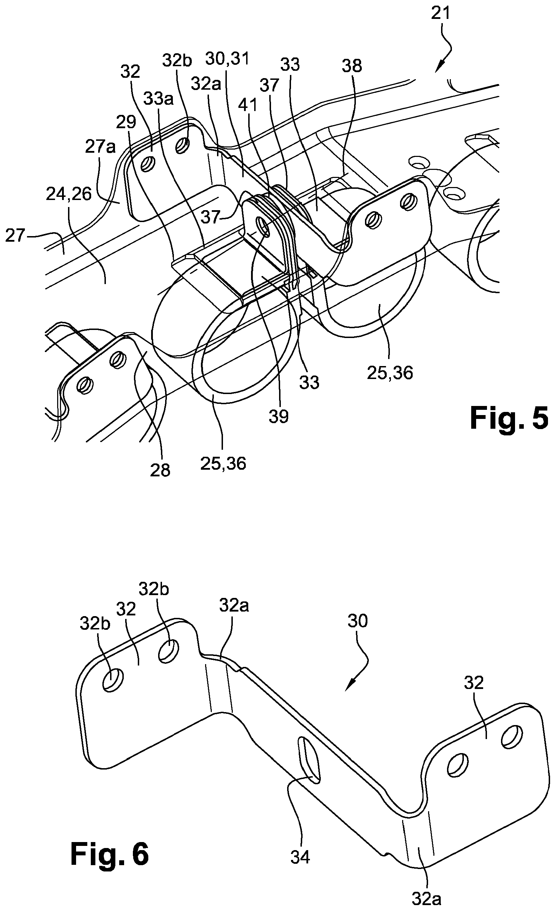

Les figures 4 et 5 illustrent une partie d'un dispositif de refroidissement 21 destiné à être monté sur un carter 18 de turbine basse pression 7 d'une turbomachine d'avion 1, selon une forme de réalisation de l'invention.

Le dispositif de refroidissement 1 comporte un support 24 formé par découpage, pliage et/ou emboutissage d'une tôle et comporte une paroi principale 26 s'étendant axialement, des rebords 27 s'étendant radialement vers l'extérieur depuis les bords latéraux de la paroi principale 26. Des zones ou lobes de fixation 27a s'étendent radialement vers l'extérieur depuis les extrémités radiales libres des rebords 27.

Les extrémités axiales de la paroi principale 26 comportent des zones de fixation 28, destinées à la fixation sur des brides du carter.

On notera qu'une les zones de fixation 28 peuvent s'étendre radialement et/ou axialement. Dans la forme de réalisation représentée aux figures, l'une des zones de fixation 28 s'étendant radialement, l'autre zone de fixation 28 s'étend axialement.

La paroi principale 26 comporte des lumières 29 de forme générale rectangulaires, ici quatre lumières 29 régulièrement réparties le long de la paroi principale. Les lumières 29 s'étendent selon l'axe du support 24.

Pour chaque lumière 29, le support 24 comporte deux parties de butée 33 s'étendant entre deux bords latéraux de la lumière 29, c'est-à-dire s'étendant circonférentiellement, lesdites partie de butée 33 s'étendant, au moins en partie, radialement à l'extérieur de la paroi principale 26. En d'autres termes, deux parties de lumière 29 s'étendent axialement de part et d'autre des parties de butée 33.

Chaque partie de butée 33 s'étend dans un plan décalé radialement vers l'extérieur de la paroi principale 23 et comporte deux extrémités circonférentielles reliées aux bords correspondants 29a de la lumière 29 par des zones de liaison 33a formant des cambrages.

Les parties de butée 33 peuvent être réalisées par emboutissage.

Le dispositif de refroidissement 1 comporte en outre des organes de liaison 30, formés par des tôles, ici quatre organes de liaison 30. Comme cela est mieux visible à la figure 6, chaque organe de liaison 30 comporte une partie centrale 31 s'étendant dans un plan radial et deux parties d'extrémité 32 configurées pour fixer l'organe de liaison 30 au support et qui s'étendent dans des plans axiaux, de part et d'autre du plan radial de la partie centrale 31, respectivement depuis une première extrémité circonférentielle et depuis une seconde extrémité circonférentielle de la partie centrale 31. Les zones de liaison 32a entre les parties d'extrémité 32 et la partie centrale 31 peuvent être arrondies ou courbes. Les zones de liaison 32a présentent ici une dimension radiale plus faible que la dimension radiale de la partie centrale 31, elle-même plus faible que la dimension radiale de chacune des parties d'extrémité 32.

Chaque partie d'extrémité 32 comporte au moins deux trous 32b, ici deux trous circulaires, permettant l'engagement de rivets non représentés, servant à la fixation des parties d'extrémité 32 sur les zones de fixation 28 du support 24.

La partie centrale 31 de chaque organe de liaison 30 comporte un trou oblong 34 s'étendant radialement.

L'organe de liaison 30 est obtenu par découpage et pliage d'une tôle.

Le dispositif de refroidissement 1 comporte en outre des organes de fixation 36, ici quatre paires d'organes de fixation 25. Chaque organe de fixation 25 comporte une partie radialement interne 36, de forme circulaire, entourant au moins en partie le tube 23 correspondant, et une partie radialement externe 37 formant une patte de fixation 37 s'étendant radialement.

Dans la forme de réalisation représentée aux figures, chaque organe de fixation 25 est obtenu par pliage d'une tôle, la patte de fixation 37 est alors formé par les deux extrémités de la tôle, qui sont plaquées l'une sur l'autre. Ceci permet de faciliter l'introduction des tubes 23 dans la partie interne 36 des organes de fixation 25. Dans la suite de la description, ces deux extrémités sont considérées comme formant un même élément, à savoir la patte de fixation 37. Bien entendu, toute autre forme de réalisation des organes de fixation 25 peut être envisagée.

Un trou est ménagé dans la patte 37, le trou étant par exemple de forme circulaire.

Les organes de fixation 25 d'une même paire sont disposés côte à côté, de façon symétrique l'un par rapport à l'autre. En particulier, les organes de fixation 25 peuvent être orientés de façon symétrique l'un par rapport à l'autre, par rapport à un plan radial parallèle aux parties externes 37 des organes de fixation. Les deux organes de fixation 25 peuvent présenter des structures identiques, ce qui permet de limiter le nombre de références de composants ainsi que les erreurs de montage.

Les parties radialement externes 37 des organes de fixation 25 d'une même paire sont fixées à la partie centrale 31 de l'organe de liaison 30, respectivement de part et d'autre axialement de la partie centrale 31. On notera que la partie interne 36 de chaque organe de fixation 25 s'étend axialement d'un seul côté du plan radial défini par la partie externe 37 correspondante. Le diamètre interne de la partie interne 36 de chaque organe de fixation 25 correspond sensiblement au diamètre externe du tube 23 correspondant.

Les parties externes ou pattes 37 sont fixées à la partie centrale 31 de l'organe de liaison 30 correspondant par l'intermédiaire d'une vis et d'un écrou inséré selon un axe schématisé par un trait référencé 38 à la figure 5, cet axe s'étend axialement à travers l'organe de liaison 30. La vis s'étend axialement au travers des trous 39 des pattes 37 et des trous oblongs de l'organe de liaison 30. La tête de la vis prend appui sur la patte 37 de l'un des organes de fixation 25 d'une paire, l'écrou prenant appui sur la patte 37 de l'autre organe de fixation 25 de ladite paire.

Il est ainsi possible de maîtriser la position radiale des organes de fixation 25 et les tubes 23, par rapport au support 24 et à l'organe de liaison 30. En d'autres termes, il est possible de maîtriser la position radiale des tubes 23 par rapport au carter 18, avant vissage ou rivetage, par déplacement radial de la vis 38 dans le trou oblong 34.

Une entretoise 41 s'étendant axialement peut être prévue entre l'une au moins des pattes 37 et la partie centrale 31 de l'organe de liaison 30. Bien entendu, une entretoise 41 peut être prévue entre chaque patte 37 et la partie centrale 31 de l'organe de liaison 30.

La longueur de l'entretoise 41 peut être choisie pour maîtriser la position axiale des tubes 23 par rapport au carter 18.

Dans le cas où le carter 18 vient en appui sur les tubes 23 ou sur les parties internes 36 des organes de fixation 25, les parties radialement internes 36 des organes de fixation 36 sont aptes à venir en appui sur les parties de butée 33 du support, au travers de la lumière 29 correspondante. On limite ainsi la déformation des organes de fixation 25 de manière à éviter toute déformation plastique de ces éléments. On notera que la formation de lumières 29 dans la paroi principale 26 permet de réduire la masse du support 24 et de limiter les contacts par vibration entre les organes de fixation 25 et le support 24.

## Revendications

1. Dispositif de refroidissement (21) configuré pour s'étendre circonférentiellement autour d'un carter (18) de turbomachine (1), tel par exemple qu'un carter (18) de turbine (7), comportant
- un support (24) s'étendant axialement et destiné à être fixé au carter (18),
- au moins un tube de refroidissement (23) s'étendant circonférentiellement,
- au moins un organe de fixation (25), comportant une partie radialement interne (36) entourant au moins en partie le tube (23), et une partie radialement externe (37) fixée au support (24),
**caractérisé en ce que** la partie radialement externe (37) de l'organe de fixation (25) est fixée au support (24) par l'intermédiaire d'un organe de liaison (30) comportant une partie centrale (31) présentant une première partie d'extrémité (32) circonférentielle et une seconde partie d'extrémité (32) circonférentielle qui sont circonférentiellement opposées, la première partie d'extrémité (32) et la seconde partie d'extrémité (32) s'étendant chacune selon une direction axiale opposée, les première et seconde parties d'extrémité (32, 32) étant chacune fixée au support (24), la partie radialement externe (37) de l'organe de fixation (25) étant fixée à la partie centrale (31) de l'organe de liaison (30).

2. Dispositif de refroidissement selon la revendication 1, **caractérisé en ce que** l'organe de liaison (30) est formé par une tôle pliée.

3. Dispositif de refroidissement selon la revendication 1 ou 2, **caractérisé en ce que** les parties d'extrémité (32, 32) de l'organe de liaison (30) sont fixées au support (24) par l'intermédiaire de rivets.

4. Dispositif de refroidissement selon l'une des revendications 1 à 3, **caractérisé en ce que** la partie radialement externe (37) de l'organe de fixation (25) est fixée à l'organe de liaison (30) par l'intermédiaire d'au moins une vis (38) ou d'un rivet s'étendant axialement.

5. Dispositif de refroidissement selon la revendication 4, **caractérisé en ce que** la partie centrale (31) de l'organe de liaison (30) comporte un trou oblong (34) s'étendant radialement, ladite vis (38) ou ledit rivet étant engagé dans ledit trou oblong (34).

6. Dispositif de refroidissement selon l'une des revendications 1 à 5, **caractérisé en ce qu'**il comporte au moins deux tubes (23) s'étendant circonférentiellement et écartés axialement l'un de l'autre, chaque tube (23) étant fixé à un organe de fixation (25), la partie radialement externe (37) de chaque organe de fixation (25) étant fixée à la partie centrale (31) d'un organe de liaison (30) respectif.

7. Dispositif de refroidissement selon l'une des revendications 1 à 6, **caractérisé en ce que** le support (24) comporte au moins une lumière (29) située radialement en regard de la partie radialement interne (36) de l'organe de fixation (25) ou des organes de fixation (25).

8. Dispositif de refroidissement selon la revendication 7, **caractérisé en ce que** le support (24) comporte une paroi principale (26) s'étendant axialement, dans laquelle est formée la lumière (29), le support (24) comportant au moins une partie de butée (33) s'étendant axialement entre deux parties de ladite lumières (29) et s'étendant, au moins en partie, radialement à l'extérieur de la paroi principale (26).

9. Dispositif de refroidissement selon l'une des revendications 1 à 8, caractérisé en en ce qu'une entretoise (41) s'étendant axialement est montée entre la partie radialement externe (37) d'au moins un organe de fixation (25) et l'organe de liaison (30).

10. Ensemble comportant un carter annulaire (18) de turbomachine (1), par exemple un carter annulaire (18) de turbine (7), **caractérisé en ce qu'**il comporte un dispositif de refroidissement (21) selon l'une des revendications 1 à 9, fixé audit carter (18) et entourant ledit carter (18).

## Patentansprüche

1. Kühlvorrichtung (21), die dazu ausgelegt ist, sich in Umfangsrichtung um ein Gehäuse (18) einer Turbomaschine (1), wie beispielsweise ein Gehäuse (18) einer Turbine (7), zu erstrecken, enthaltend:
- eine sich axial erstreckende Halterung (24), die an das Gehäuse (18) befestigt werden soll,
- zumindest ein Kühlrohr (23), das sich in Umfangsrichtung erstreckt,
- zumindest ein Befestigungsorgan (25), das einen radial inneren Abschnitt (36), der das Rohr (23) zumindest teilweise umgibt, und einen radial äußeren Abschnitt (37), der an die Halterung (24) befestigt ist, enthält,
**dadurch gekennzeichnet, dass** der radial äußere Abschnitt (37) des Befestigungsorgans (25) an die Halterung (24) über ein Verbindungsorgan (30) befestigt ist, das einen Mittelabschnitt (31) mit einem ersten Umfangsendabschnitt (32) und einem zweiten Umfangsendabschnitt (32) aufweist, die in Umfangsrichtung entgegengesetzt angeordnet sind, wobei sich der erste Endabschnitt (32) und der zweite Endabschnitt (32) jeweils in einer entgegengesetzten axialen Richtung erstrecken, wobei der erste und der zweite Endabschnitt (32, 32) jeweils an die Halterung (24) befestigt sind, wobei der radial äußere Abschnitt (37) des Befestigungsorgans (25) an den Mittelabschnitt (31) des Verbindungsorgans (30) befestigt ist.

2. Kühlvorrichtung nach Anspruch 1, **dadurch gekennzeichnet, dass** das Verbindungsorgan (30) aus einem gebogenen Blech gebildet ist.

3. Kühlvorrichtung nach Anspruch 1 oder 2, **dadurch gekennzeichnet, dass** die Endabschnitte (32, 32) des Verbindungsorgans (30) mit Hilfe von Nieten an die Halterung (24) befestigt sind.

4. Kühlvorrichtung nach einem der Ansprüche 1 bis 3, **dadurch gekennzeichnet, dass** der radial äußere Abschnitt (37) des Befestigungsorgans (25) über zumindest eine sich axial erstreckende Schraube (38) bzw. Niete an das Verbindungsorgan (30) befestigt ist.

5. Kühlvorrichtung nach Anspruch 4, **dadurch gekennzeichnet, dass** der Mittelabschnitt (31) des Verbindungsorgans (30) ein sich radial erstreckendes Langloch (34) aufweist, wobei die Schraube (38) bzw. Niete in das Langloch (34) eingreift.

6. Kühlvorrichtung nach einem der Ansprüche 1 bis 5, **dadurch gekennzeichnet, dass** sie zumindest zwei Rohre (23) enthält, die sich in Umfangsrichtung erstrecken und axial voneinander beabstandet sind, wobei jedes Rohr (23) an ein Befestigungsorgan (25) befestigt ist, wobei der radial äußere Abschnitt (37) jedes Befestigungsorgans (25) an den Mittelabschnitt (31) eines jeweiligen Verbindungsorgans (30) befestigt ist.

7. Kühlvorrichtung nach einem der Ansprüche 1 bis 6, **dadurch gekennzeichnet, dass** die Halterung (24) zumindest einen Schlitz (29) aufweist, der dem radial inneren Abschnitt (36) des Befestigungsorgans (25) bzw. der Befestigungsorgane (25) radial gegenüberliegt.

8. Kühlvorrichtung nach Anspruch 7, **dadurch gekennzeichnet, dass** die Halterung (24) eine sich axial erstreckende Hauptwand (26) aufweist, in welcher der Schlitz (29) ausgebildet ist, wobei die Halterung (24) zumindest einen Anschlagabschnitt (33) aufweist, der sich axial zwischen zwei Abschnitten des Schlitzes (29) erstreckt und zumindest teilweise radial außerhalb der Hauptwand (26) verläuft.

9. Kühlvorrichtung nach einem der Ansprüche 1 bis 8, **dadurch gekennzeichnet, dass** ein sich axial erstreckender Abstandhalter (41) zwischen dem radial äußeren Abschnitt (37) zumindest eines Befestigungsorgans (25) und dem Verbindungsorgan (30) angebracht ist.

10. Anordnung mit einem ringförmigen Gehäuse (18) einer Turbomaschine (1), beispielsweise einem ringförmigen Gehäuse (18) einer Turbine (7), **dadurch gekennzeichnet, dass** sie eine Kühlvorrichtung (21) nach einem der Ansprüche 1 bis 9 enthält, die an das Gehäuse (18) befestigt ist und das Gehäuse (18) umgibt.

## Claims

1. Cooling device (21) configured to extend circumferentially around a casing (18) of a turbomachine (1), such as for example a casing (18) of a turbine (7), comprising:
- an axially extending support (24) for attachment to the casing (18),
- at least one circumferentially extending cooling tube (23),
- at least one fixing device (25), comprising a radially inner portion (36) at least partly surrounding the pipe (23), and a radially outer portion (37) fixed to the support (24), **characterised in that** the radially outer portion (37) of the fixing device (25) is fixed to the support (24) via a connecting member (30) comprising a central portion (31) having a first circumferential end portion (32) and a second circumferential end portion (32) which are circumferentially opposite, the first end portion (32) and the second end portion (32) each extending in an opposite axial direction, the first and second end portions (32, 32) each being fixed to the support (24), the radially outer portion (37) of the fixing member (25) being fixed to the central portion (31) of the connecting member (30).

2. Cooling device according to claim 1, **characterised in that** the connecting member (30) is formed by a folded sheet metal.

3. Cooling device according to claim 1 or 2, **characterised in that** the end parts (32, 32) of the connecting member (30) are fastened to the support (24) by means of rivets.

4. Cooling device according to one of claims 1 to 3, **characterised in that** the radially outer part (37) of the fixing device (25) is fastened to the connecting member (30) by means of at least one axially extending screw (38) or rivet.

5. Cooling device according to claim 4, **characterised in that** the central portion (31) of the connecting member (30) has a radially extending oblong hole (34), said screw (38) or said rivet being engaged in said oblong hole (34).

6. Cooling device according to one of claims 1 to 5, **characterised in that** it comprises at least two tubes (23) extending circumferentially and axially spaced apart, each tube (23) being attached to a fixing device (25), the radially outer part (37) of each fixing device (25) being attached the central part (31) of a respective connecting member (30).

7. Cooling device according to one of claims 1 to 6, **characterised in that** the support (24) has at least one lumen (29) located radially opposite the radially inner part (36) of the fixing device (25) or devices (25).

8. Cooling device according to claim 7, **characterised in that** the support (24) may have an axially extending main wall (26) in which the lumen (29) is formed, the support (24) having at least one stop portion (33) extending axially between two portions of said lumens (29) and extending, at least in part, radially outwardly from the main wall (26).

9. Cooling device according to one of claims 1 to 8, **characterised in that** an axially extending spacer (41) is mounted between the radially outer part (37) of at least one fixing device (25) and the connecting member (30).

10. Assembly comprising an annular casing (18) of a turbomachine (1), for example an annular casing (18) of a turbine (7), **characterised in that** it comprises a cooling device (21) according to one of claims 1 to 9, fixed to said casing (18) and surrounding said casing (18).
